# EUROPÄISCHE PATENTANMELDUNG

(11) **EP 1 672 328 A2**
(43) Veröffentlichungstag der Anmeldung: **21.06.2006**
(21) Anmeldenummer: 05110288.7
(22) Anmeldetag: 03.11.2005
(51) Int. Cl.: G01D 11/24

(54) **Magnetfeldsensor**

(30) Priorität: 20.12.2004 DE 102004061260
(71) Anmelder: ROBERT BOSCH GMBH, 70442 Stuttgart (DE)
(72) Erfinder: Braun, Alexander, 75173, Pforzheim (DE); Herzberger, Andreas, 73035, Goeppingen (DE); Waldenmeier, Steffen, 75181, Pforzheim (DE)

(57) **Zusammenfassung**

Es wird ein Magnetfeldsensor, insbesondere ein Drehzahlsensor und/oder Drehrichtungssensor und/oder Positionssensor für den Antriebsstrang eines Kraftfahrzeuges, sowie ein Verfahren zur Herstellung eines derartigen Magnetfeldsensors vorgeschlagen, welcher eine Sensoranordnung (22) mit einem auf ein Magnetfeld ansprechenden Sensorelement (24) und gegebenenfalls einen Dauermagneten aufweist, wobei letzterer gemeinsam mit der Sensoranordnung (22) und Teilen von Anschluss-Leiterbahnen (26, 28) mit Kunststoff (62) umhüllt ist und die Leiterbahnen einteilig mit einer Arretierung für den Dauermagnet (14) und die Sensoranordnung (22) als Stanzgitter (12) ausgebildet sind. Das Stanzgitter (12) ist hierbei als dreidimensionale Struktur geformt, welche die Sensoranordnung (22) trägt und gegebenenfalls den Dauermagneten nach Art einer Halterung (10) umgreift. Die Halterung und die Anschluss-Leiterbahnen (26, 28) werden aus einem Blech zunächst als gitterartige Abwicklung ausgestanzt und anschließend zu der Halterung verformt.

## Beschreibung

### Stand der Technik

Die Erfindung betrifft einen Magnetfeldsensor, insbesondere einen Drehzahlsensor und/oder einen Drehrichtungssensor und/oder einen Positionssensor, vorzugsweise für den Antriebsstrang eines Kraftfahrzeuges, sowie ein Verfahren zur Herstellung eines derartigen Sensors, wie er beispielsweise aus der EP 0 898 180 A bekannt geworden ist. Diese Druckschrift zeigt einen Rahmen für die Montage eines Magnetfeldsensors, welcher Querstege für die Arretierung eines Dauermagneten und mehrerer Anschluss-Leiterbahnen für eine Sensoranordnung aufweist, welche ihrerseits bei der Montage und einem späteren Kunststoffverguss auf einem ebenen Abschnitt des Rahmens aufliegt. Eine derartige Anordnung gewährleistet einerseits keine exakte Positionierung der Sensorbauteile und andererseits keine exakte Zuordnung zwischen Dauermagnet und Sensoranordnung, da der Dauermagnet und die Sensorenanordnung durch separate Rahmenteile fixiert werden und zudem die klemmende Halterung des Dauermagneten unabhängig von der Positionierung der Sensoranordnung erfolgt.

Der Erfindung liegt die Aufgabe zugrunde, einen Magnetfeldsensor und ein Verfahren zu seiner Herstellung anzugeben, welche sich durch geringe Toleranzfelder sowohl im Produktaufbau als auch hinsichtlich der Fertigungsschritte auszeichnen. Durch die hohe Produkt- und Fertigungspräzision soll weiterhin eine exakte Lage des Magnetfeldsensors gegenüber seinem Detektionsziel gewährleistet werden, das heißt im bevorzugten Anwendungsfall ein exakt einhaltbarer kleiner Luftspalt gegenüber einem Geberrad, das an seinem Umfang am Sensor vorbei bewegte ferromagnetische Zähne oder Magnetpole aufweist, welche sich zur Ermittlung der Drehzahl und/oder der Drehrichtung und/oder der Position mit Zahnlücken oder Pollücken abwechseln. Anstelle eines Geberrades kann auch eine Zahn- oder Polstange als Geberstruktur dienen, wobei im Falle einer Geberanordnung mit Magnetpolen (Multipolstruktur) im Magnetfeldsensor kein Magnet angeordnet ist. Diese Aufgabe wird gelöst durch die kennzeichnenden Merkmale der Ansprüche 1 und 10.

Als konstruktiv vorteilhaft hat es sich erwiesen, wenn zusätzlich zu der Sensoranordnung auch ein dauermagnetischer Geber in der Stanzgitterstruktur gehalten und positioniert wird und diese den Dauermagneten wenigstens teilweise umgreift. Dabei ist es zweckmäßig, wenn das die aktiven Teile des Sensors tragende Stanzgitter aus einer Kupferbronze, zum Beispiel CuSn6, besteht, weil eine derartige Legierung einerseits eine hohe Stabilität und Elastizität aufweist und andererseits problemlos und sicher mit den Anschlüssen der Sensoranordnung, vorzugsweise durch Schweißen/Bonden, verbunden werden kann. Anstelle einer Kupferbronze eignen sich als Stanzgittermaterialien auch Aluminiumlegierungen, zum Beispiel AlMgSil, und Kupfereisenlegierungen mit geringem Eisenanteil, zum Beispiel CuFe2P.

Zur Harmonisierung des von einem Dauermagneten im Sensor erzeugten Magnetfeldes ist es vorteilhaft, wenn dem Dauermagnet auf seiner dem Sensorelement zugewandten Stirnseite eine ferromagnetische Streuscheibe zugeordnet wird, welche ebenfalls in der Halterung für den Dauermagnet zwischen dem Magneten und der Sensoranordnung sicher gehalten und positioniert werden kann. Bei Ausführungen mit externer magnetischer Geberstruktur entfällt im Sensor auch die Streuscheibe.

Zur präzisen Abstützung und Ausrichtung der Sensoranordnung und des Dauermagneten ist es weiterhin vorteilhaft, wenn die hierfür vorgesehenen Halterungsteile elastisch verformbare Abschnitte aufweisen zur klemmenden Aufnahme des Dauermagneten und/oder der Streuscheibe und/oder des Sensors, wobei die verformbaren Abschnitte zumindest den Dauermagneten auf einem Teil seiner Oberfläche formschlüssig umgreifen und unter Spannung an der Oberfläche des Magneten anliegen.

Hinsichtlich des erfindungsgemäßen Verfahrens zur Herstellung des Magnetfeldsensors ist es besonders zweckmäßig, wenn zur Ausbildung der Halterung der Sensoranordnung und gegebenenfalls weiterer Bauteile zunächst aus einem Blech eine gitterartige Abwicklung der Halterung und der Anschluss-Leiterbahnen ausgestanzt wird, welche anschließend durch Biegen, Prägen oder andere geeignete Verfahren zu der Halterung geformt wird, welche sich einteilig in den Leiterbahnen fortsetzt. Besonders zweckmäßig ist es hierbei, wenn sowohl das Stanzen des Gitters als auch dessen Formgebung in einem Folgeverbundwerkzeug durchgeführt werden, in dem auch weitere Maßnahmen wie beispielsweise das Bestücken der Halterung mit dem Dauermagneten, der Sensoranordnung, einer Streuscheibe und gegebenenfalls weiterer Teilen ohne Werkzeugwechsel erfolgen kann. Die abschließende Umhüllung und äußere Gestaltung des Magnetfeldsensors erfolgt zweckmäßigerweise durch Vergießen oder Umspritzen der Gesamtanordnung mit Ausnahme der Leiterbahnenden mit Kunststoff.

Weitere Einzelheiten und vorteilhafte Ausgestaltungen der Erfindung ergeben sich aus den Unteransprüchen und der Beschreibung der in den Figuren dargestellten Ausführungsbeispiele.

### Es zeigen:

Figur 1 eine perspektivische Darstellung eines fertig geformten und bestückten Magnetfeldsensors vor der Umhüllung mit Kunststoff,
Figur 2 eine perspektivische Darstellung der Halterung des Magnetfeldsensors vor der Bestückung,
Figur 3 eine Seitenansicht des bestückten Magnetfeldsensors mit schematisch dargestelltem Kunststoffverguss und
Figur 4 eine perspektivische Darstellung einer weiteren Ausführungsform einer Stanzgitter-Halterung.

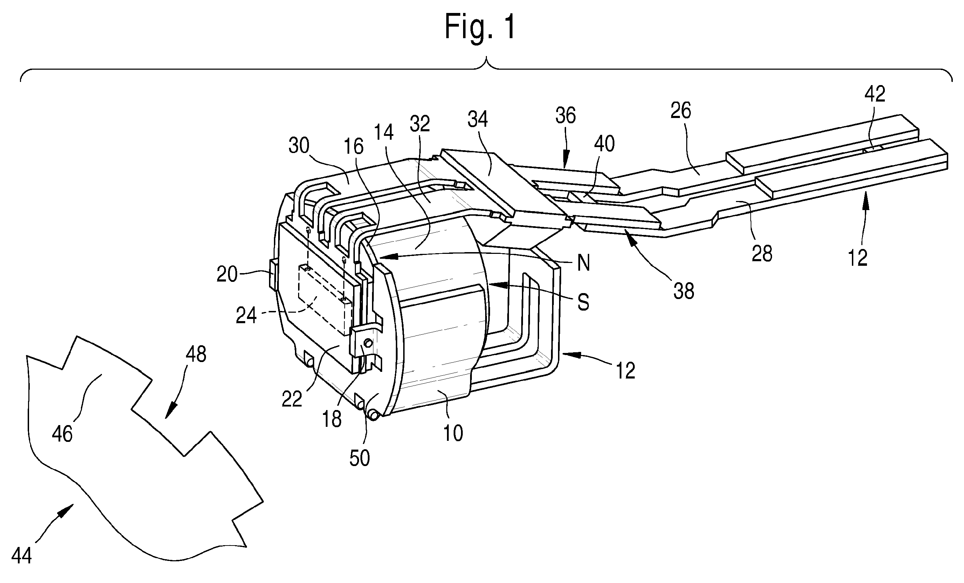

Figur 1 zeigt einen Magnetfeldsensor vor der Umhüllung mit Kunststoff, wie er beispielsweise als Drehzahlsensor und gleichzeitig als Drehrichtungssensor für das Getriebe eines Kraftfahrzeuges verwendbar ist. Hierbei ist mit 10 eine Halterung für die verschiedenen Bauteile des Sensors bezeichnet, welche aus einem Blech aus Kupferbronze (CuSn6) als Abwicklung der Halterung 10 in Form eines ebenen Stanzgitters 12 ausgestanzt ist. In der Halterung sitzt ein runder oder ovaler, in Achsrichtung magnetisierter Dauermagnet 14, welcher so angeordnet ist, dass er auf seiner linken Stirnseite einen Nordpol (N) und auf seiner rechten Stirnseite einen Südpol (S) aufweist. Innerhalb der Halterung 10 sitzt auf der Nordpol-Stirnseite des Dauermagneten 14 eine Streuscheibe 16 aus Weicheisen, welche nur eine geringe Dicke aufweist und durch das Feld des Magneten in Sättigung gehalten wird, so dass sie das Magnetfeld harmonisiert und eine weitgehend gleich hohe Feldstärke im Messbereich vor dem Nordpol des Magneten sicherstellt.

Außerhalb der Halterung 10 ist parallel zur Stirnfläche des Dauermagneten 14 zwischen zwei Klammern 18 und 20 die eigentliche Sensoranordnung 22 gehalten, welche als IC-Bauelement ausgeführt ist und ein gestrichelt angedeutetes Sensorelement 24 in Form eines Hall-Elementes enthält.

Die Halterung 10 ist entsprechend der Geometrie des ursprünglichen Stanzgitters 12 einteilig gestaltet und mit zwei Leiterbahnen 26 und 28 ausgeführt, wobei die Leiterbahn 26 die Masseverbindung und die Leiterbahn 28 die Signalverbindung zum Sensorelement 24 bildet. Der Dauermagnet 14 liegt ebenfalls auf Masse. Die inneren Anschlüsse des Sensorelementes 24 sind nur gestrichelt angedeutet, nach außen besitzt die Sensoranordnung 22 Anschlussleiter 30 und 32, welche an ihren Enden mit den Leiterbahnen 26 und 28 verschweißt sind. Im mittleren Bereich sind die Anschlussleiter 30 und 32 zum Schutz gegen Überspannungen mit einem Kondensator 34 überbrückt. Die Enden der Leiterbahnen 26 und 28 sind in dem aus dem späteren Kunststoffverguss herausragenden Teil und ein Stück weit auch innerhalb des Kunststoffes verstärkt, beispielsweise durch umgeklappte Abschnitte 36 und 38 auf die doppelte Materialstärke des Stanzgitters 12. Weiterhin sind die Leiterbahnen 26 und 28 in diesem Stadium der Fertigung vor dem abschließenden Verguss zur Stabilisierung der Anordnung noch durch Stege 40 und 42 zusammengehalten, wobei zumindest der Steg 40 bereits vor dem abschließenden Verguss entfernt wird. Schließlich ist in Figur 1 schematisch noch ein mit der Sensoranordnung 22 zusammenwirkendes ferromagnetisches Geberrad 44 angedeutet, welches durch abwechselndes Vorbeiführen von Zähnen 46 und Zahnlücken 48 durch die Veränderung des Magnetfeldes die von der Sensoranordnung 22 abgegebenen Signale erzeugt.

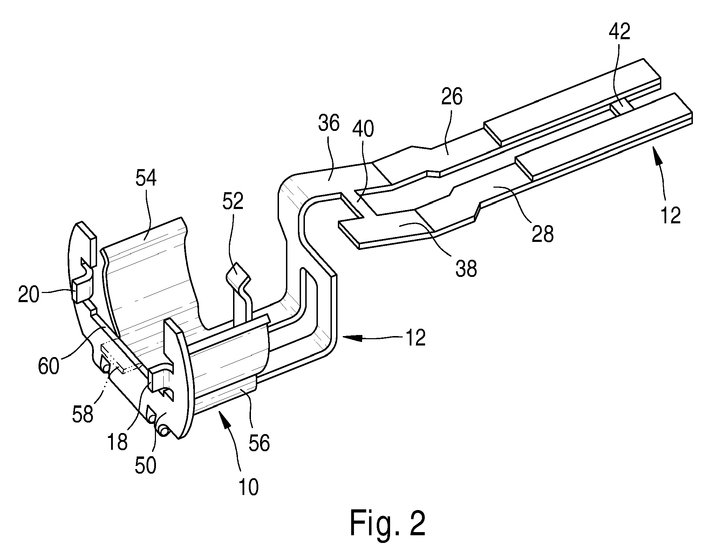

In den folgenden Figuren sind gleiche Teile mit gleichen Bezugszeichen versehen wie in Figur 1. Hierbei zeigt Figur 2 die aus dem Stanzgitter 12 einteilig mit den Leiterbahnen 26 und 28 geformte, unbestückte Halterung 10. Diese besitzt im vorderen Bereich einen rechtwinklig abgebogenen Flansch 50, an dem sich der Dauermagnet 14 mit gegebenenfalls aufgesetzter Streuscheibe 16 stirnseitig abstützt. An der gegenüberliegenden Stirnseite wird der Dauermagnet 14 durch eine Lasche 52 unter Vorspannung gehalten und an den Flansch 50 angedrückt. Die seitliche Arretierung des Dauermagneten 14 im Bereich seiner Mantelfläche erfolgt durch zwei elastische Segmente 54 und 56 deren Gestaltung der Form des Dauermagneten 14 angepasst ist, welche insbesondere rund, oval oder auch rechteckig sein kann. Auf der äußeren Stirnfläche des Flanschs 50 sind die beiden Klammern 18 und 20 zu erkennen, welche kraftschlüssig die Sensoranordnung 22 halten. Bei Bedarf kann jedoch auch zusätzlich noch eine weitere Klammer 58 im Bereich der Unterkante der Sensoranordnung 22 vorgesehen werden, um die Positionierung beim Einfügen der Sensoranordnung 22 zu erleichtern.

Hinsichtlich der Leiterbahnen 26 und 28 ist bereits bei der Gestaltung des Stanzgitters 12 der Tatsache Rechnung getragen, dass die Leiterbahn 26 die Masseverbindung und die Leiterbahn 28 die Signalverbindung herstellen soll. Aus diesem Grund ist die Leiterbahn 26 durchgehend und einteilig mit dem die Halterung 10 bildenden Teil des Stanzgitters 12 gestaltet, während die Leiterbahn 28 während der Montage durch Stege 40 und 42 im Stanzgitter 12 gehalten ist. Zur Verbesserung und Erleichterung der Löt- oder Schweißverbindungen ist das Stanzgitter 12 entweder insgesamt aus einem galvanisch oder durch Feuerverzinnen auf seiner Oberfläche beschichteten Blech aus Kupfer oder Kupferbronze hergestellt. Grundsätzlich genügt es jedoch, wenn nur die späteren Schweiß- oder Lötstellen verzinnt sind. Die Materialstärke des Stanzgitters gewährleistet eine ausreichende mechanische Festigkeit.

Aus Figur 2 ist weiter ersichtlich, dass bei dieser Ausführungsform der Flansch 50 an der Stirnseite der Halterung 10 oben nicht geschlossen ist und im mittleren Bereich eine Öffnung 60 freilässt, welche der Größe der Sensoranordnung 22 entspricht. Hierdurch kann die Sensoranordnung 22 bis an die Stirnfläche des Dauermagneten 14, beziehungsweise an die Stirnfläche der Streuscheibe 16 heranreichen, so dass die Arretierung und Zentrierung der Sensoranordnung 22 weiter verbessert und die axiale Einbaulänge verringert wird.

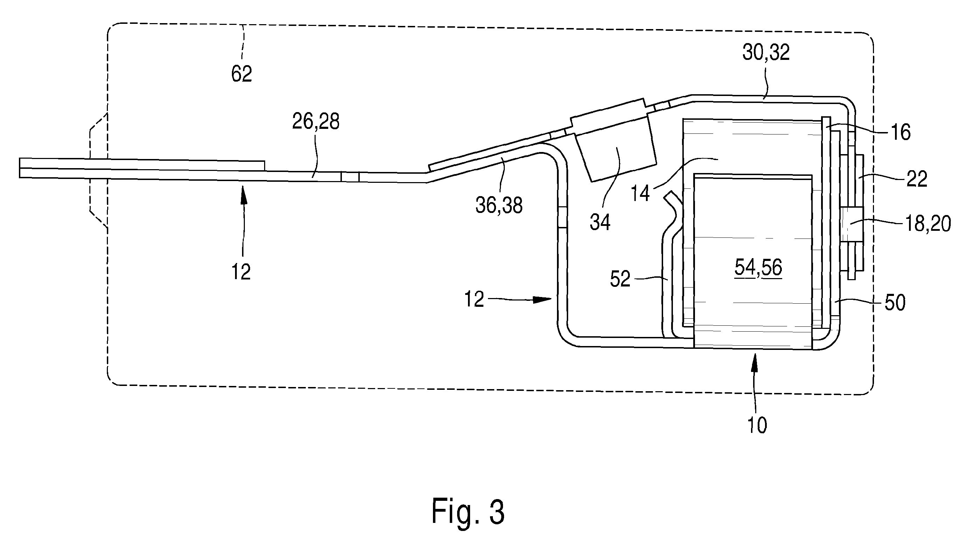

Figur 3 zeigt eine Seitenansicht des Magnetfeldsensors gemäß Figur 1, wobei der abschließende Kunststoffverguss 62 symbolisch durch eine gestrichelte Linie angedeutet ist. Die äußere Kontur des Kunststoffes 62 wird an die jeweiligen Einbauverhältnisse angepasst und auch hinsichtlich der Größe und Gestalt des Sensors optimiert, um einerseits eine hohe mechanische Festigkeit zu gewährleisten und andererseits die Kunststoffmasse zu minimieren zur Verringerung der thermischen und mechanischen Belastung des Sensors während der Fertigung. Ansonsten ist aus Figur 3 insbesondere nochmals die räumliche Anordnung und Halterung des Dauermagnet 14, der Streuscheibe 16 und der Sensoranordnung 22 in der aus dem Stanzgitter 12 geformten Halterung 10 zu erkennen, wobei der Dauermagnet und die Streuscheibe 16 sicher und präzise im Inneren der Halterung 10 arretiert sind, während durch die Montage der Sensoranordnung 22 außen am Flansch 50 der Halterung 10 der Luftspalt zu dem in Figur 3 nicht dargestellten Geberrad 44 minimiert wird.

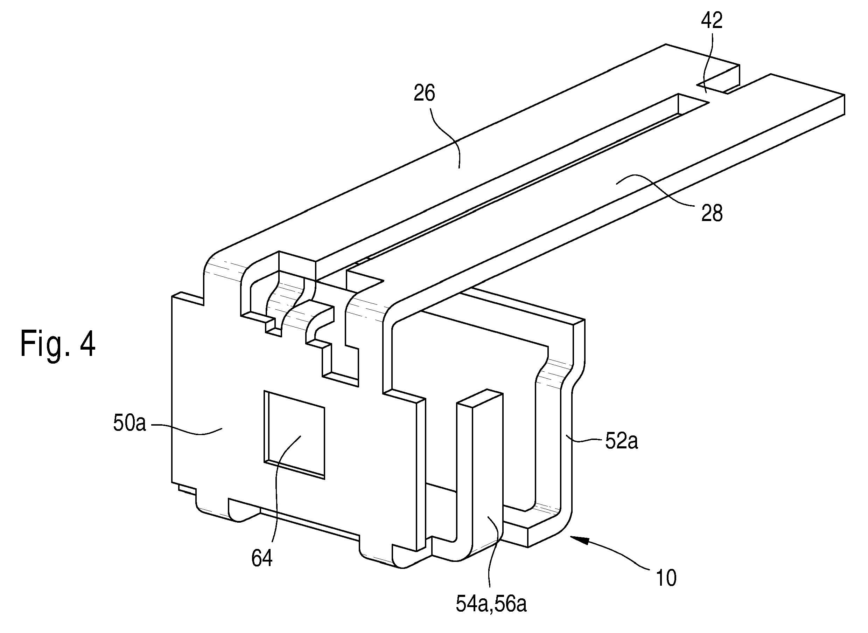

Figur 4 zeigt eine Alternative für die Gestaltung des Stanzgitters 12, beziehungsweise der Halterung 10 und der Leiterbahnen 26, 28. Die Halterung 10 ist hierbei so geformt, dass sie insbesondere zur Aufnahme eines rechteckförmigen Dauermagneten geeignet ist. Bei der Montage wird eine rahmenförmige Lasche 52a oder wenigstens ein seitliches Segment 54a oder 54b erst nach dem Einfügen des nicht dargestellten Dauermagneten in der gezeichneten Form hoch gebogen. Ein weiterer Unterschied liegt in der Gestaltung des stirnseitigen Flanschs 50a, welcher in diesem Fall keine Öffnung sondern in nur eine Einprägung 64 aufweist. Da das Stanzgitter 12 nicht aus ferromagnetischem Material sondern beispielsweise aus Kupfer oder Kupferbronze hergestellt ist, kann das Feld des Dauermagneten durch den Flansch 50a hindurchtreten. Die Einprägung 64 dient zur exakten Positionierung des Dauermagneten und ist besonders dann vorteilhaft, wenn es sich bei dem Dauermagneten um einen so genannten Spaltmagneten mit im Wesentlichen U-förmiger Geometrie handelt, so dass die Einprägung 64 in den Spalt eingreift und den Magnet exakt positioniert.

Hinsichtlich der Herstellung des erfindungsgemäßen Magnetfeldsensors ist bereits ausgeführt worden, dass zunächst aus einem Blech eine gitterartige Abwicklung der Halterung 10 und der Anschluss-Leiterbahnen 26, 28 ausgestanzt wird, welche anschließend im Bereich des Dauermagneten 14 und der Sensoranordnung 22 und gegebenenfalls weiterer Bauteile wie der Streuscheibe 16 zu der Halterung 10 geformt wird. Zweckmäßigerweise erfolgt die Fertigung des Magnetfeldsensors dabei in einem so genannten Folgeverbundwerkzeug, in welchem in aufeinander folgenden Arbeitsschritten das Ausstanzen des Stanzgitters 12 aus einem Bandmaterial und die Formgebung der Halterung 10 mit den Leiterbahnen 26 und 28 sowie deren Bestückung mit den einzelnen Bauteilen des Sensors erfolgt. Lediglich der abschließende Verguss des Magnetfeldsensors mit einem vorzugsweise duroplastischen Kunststoff 62 erfolgt dann in einem getrennten Arbeitsgang und einem separaten Werkzeug.

Mit dem erfindungsgemäßen Magnetfeldsensor können beispielsweise im Bereich der Sensorik für das Motor- und Getriebemanagement eines Kraftfahrzeuges eine Vielzahl unterschiedlicher Funktionen abgedeckt werden, vorzugsweise in der Anwendung als Phasengeber und/oder Drehzahlgeber. Als magnetosensitive Messelemente 24 der Sensoranordnung 22 werden neben Hall-Elementen insbesondere AMR -(Anisotrop-Magneto-Resistor) und GMR -(Giant-Magneto-Resistor) Elemente sowie Feldplatten verwendet, wobei im Einsatz derartiger IC-Sensoranordnungen 22 die erforderliche exakte Positionierung, beispielsweise gegenüber einem Geberrad, sehr genau und mit verhältnismäßig geringem Material- und Teileaufwand eingehalten werden kann. Man erreicht so eine Reduzierung von Toleranzen in allen Richtungen bei gleichzeitiger Verminderung der Fertigungsschritte bei der Herstellung des Sensors. Außerdem kann die Funktionsreichweite bei gleichzeitiger Reduzierung der Funktionslänge und des Durchmessers erhöht werden, so dass hinsichtlich des Luftspaltes größere Toleranzen akzeptierbar sind. Für die Serienfertigung schaffen die erfindungsgemäße Gestaltung und das zugehörige Herstellungsverfahren die Möglichkeit, das Stanzgitter 12 während der Fertigung an einem Trägerstreifen des Bandes zu belassen, aus dem das Stanzgitter 12 frei gelegt wird. Dies eröffnet zum Beispiel die Möglichkeit, die fertigen Stanzgitter am Ende des Bieg- und Stanzprozesses in aufgerollter Form bis zur Weiterverarbeitung sicher aufzubewahren oder in dieser Form an andere Fertigungsorte zu transportieren. Insbesondere wird jedoch durch die kombinierte Lösung der Halteaufgabe für den Magnetkreis und der gleichzeitigen Strom- und Signalführung in einem Bauteil eine sehr kompakte, stabile und einfach fertigbare Einheit realisiert, welche sich durch erhöhte Präzision und verringerte Fertigungskosten auszeichnet.

## Patentansprüche

1. Magnetfeldsensor, insbesondere Drehzahlsensor und/oder Drehrichtungssensor und/oder Positionssensor, vorzugsweise für den Antriebsstrang eines Kraftfahrzeuges, welcher eine Sensoranordnung mit einem auf ein Magnetfeld ansprechenden Sensorelement aufweist, wobei die Sensoranordnung und Teile von Anschluss-Leiterbahnen mit Kunststoff umhüllt sind und die Leiterbahnen einteilig mit einer Arretierung für die Sensoranordnung als Stanzgitter ausgebildet sind, **dadurch gekennzeichnet, dass** das Stanzgitter (12) in einem einer Geberanordnung (44) benachbarten Bereich als dreidimensionale Struktur geformt ist und auf einem stirnseitigen Abschnitt (50) die Sensoranordnung (22) trägt.

2. Magnetfeldsensor nach Anspruch 1, **dadurch gekennzeichnet, dass** das Stanzgitter (12) aus einer Kupferbronze, insbesondere (CuSn6) besteht.

3. Magnetfeldsensor nach Anspruch 1 oder 2, **dadurch gekennzeichnet, dass** das Stanzgitter (12) an seiner Oberfläche zumindest im Bereich von Löt- oder Schweißstellen (36, 38) mit einer metallischen Oberfläche, vorzugsweise mit Zinn (Sn), beschichtet ist.

4. Magnetfeldsensor nach einem der vorhergehenden Ansprüche, **dadurch gekennzeichnet, dass** ein Dauermagnet (14) in der aus dem Stanzgitter (12) geformten Struktur positioniert und arretiert ist.

5. Magnetfeldsensor nach Anspruch 4, **dadurch gekennzeichnet, dass** die Stanzgitterstruktur (22) den Dauermagneten (14) nach Art einer Halterung (10) wenigstens teilweise umgreift.

6. Magnetfeldsensor nach einem der vorhergehenden Ansprüche, **dadurch gekennzeichnet, dass** in der Halterung (10) zwischen dem Dauermagnet (14) und der Sensoranordnung (22) eine ferromagnetische Streuscheibe (16) angeordnet ist.

7. Magnetfeldsensor nach einem der vorhergehenden Ansprüche, **dadurch gekennzeichnet, dass** die Halterung (10) elastisch verformbare Abschnitte (52, 54, 56) aufweist zur klemmenden Aufnahme des Dauermagneten (14) und/oder der Sensoranordnung (22) und/oder der Streuscheibe (16)

8. Magnetfeldsensor nach einem der vorhergehenden Ansprüche, **dadurch gekennzeichnet, dass** die Halterung (10) im Bereich der Sensoranordnung (22) eine Öffnung (60) aufweist.

9. Magnetfeldsensor nach einem der vorhergehenden Ansprüche, **dadurch gekennzeichnet, dass** die Halterung (10) zusammen mit dem Dauermagnet (14), der Sensoranordnung (22), Teilen der Leiterbahnen (26, 28) und gegebenenfalls weiteren Bauteilen (16, 34) mit einer Umhüllung (62) aus thermoplastischem und/oder duroplastischem Kunststoff versehen ist.

10. Verfahren zur Herstellung eines Magnetfeldsensors, insbesondere eines Drehzahlsensors und/oder eines Drehrichtungssensor und/oder eines Positionssensors, vorzugsweise für den Antriebsstrang eines Kraftfahrzeuges, welcher eine Sensoranordnung mit einem auf ein Magnetfeld ansprechenden Sensorelement aufweist, wobei die Sensoranordnung und Teile von Anschluss-Leiterbahnen mit Kunststoff umhüllt und die Leiterbahnen einteilig mit einer Arretierung für die Sensoranordnung als Stanzgitter ausgebildet sind, **dadurch gekennzeichnet, dass** aus einem Blech zunächst eine gitterartige Abwicklung einer Halterung (10) für die Sensoranordnung und/oder Anschluss-Leiterbahnen (26, 28) ausgestanzt wird, welche anschließend im Bereich der Sensoranordnung (22) und gegebenenfalls weiterer Bauteile (16) zu der Halterung (10) geformt wird.

11. Verfahren nach Anspruch 10, **dadurch gekennzeichnet, dass** ein Dauermagnet (14) in den Sensor integriert und das Stanzgitter (12) in Form einer Halterung (10) für den Dauermagneten (14) geformt wird.

12. Verfahren nach Anspruch 10 oder 11, **dadurch gekennzeichnet, dass** eine Mehrzahl von Stanzgittern (12) durch ein Folgeverbundwerkzeug aus Bandmaterial ausgestanzt und in weiteren Arbeitsschritten geformt und bestückt wird.

13. Verfahren nach einem der Ansprüche 10 bis 12, **dadurch gekennzeichnet, dass** die Halterung (10) mit dem Dauermagneten (14), der Sensoranordnung (22) und gegebenenfalls weiteren Bauteilen (16, 34) sowie Teile der Leiterbahnen (26, 28) in einem getrennten Arbeitsgang mit vorzugsweise duroplastischem Kunststoff (62) umspritzt werden.
